# EUROPEAN PATENT APPLICATION

(11) **EP 2 595 282 A2**
(43) Date of publication of application: **22.05.2013**
(21) Application number: 12192476.5
(22) Date of filing: 13.11.2012
(51) Int. Cl.: H02K 1/27

(54) **Rotor and permanent magnetic rotating machine**

(30) Priority: 16.11.2011 JP 2011250628
(71) Applicant: Shin-Etsu Chemical Co., Ltd., Chiyoda-ku Tokyo (JP)
(72) Inventor: Kobayashi, Hideki, Tokyo, Tokyo (JP)
(74) Representative: Martin, Didier Roland Valéry

(57) **Abstract**

Disclosed are a rotor adapted for a permanent magnetic rotating machine and the permanent magnetic rotating machine having a high output and demagnetization resistance.

Provided are a rotor adapted for a permanent magnetic rotating machine, the machine comprising a rotor and a stator comprising a stator core having two or more slots, and winding wires wound through the stator core, the rotor comprising: a rotor core having two or more insertion holes formed in the rotor core; and two or more permanent magnets in the two or more insertion holes; and each of the permanent magnets is in form of rectangle with two opposite sides substantially parallel to a radial direction of the rotor on a surface vertical to a rotation axis of the rotor, and is in form of rectangular parallelepiped with four longitudinal edges parallel to the rotation axis, and the permanent magnet has at least one angular portion of four angular portions containing the four longitudinal edges, which has stronger coercive force than a center within the rectangular parallelepiped, and is placed in the insertion hole in such a manner that one of the at least one angular portion is in a stator side and in the rear of a rotating direction of the rotor, and a permanent magnetic rotating machine comprising the rotor.

## Description

### BACKGROUND OF THE INVENTION

### 1. Field of the Invention

The present invention relates to a rotor used in a permanent magnetic rotating machine and a permanent magnetic rotating machine comprising the rotor. The permanent magnetic rotating machine (so-called an interior permanent magnet (IPM) rotating machine) comprises the rotor having two or more permanent magnets in a rotor core, and a stator disposed with a clearance from the rotor and having a stator core with two or more slots and winding wires wound through the stator core.

### 2. Description of the Related Art

The purpose of an Nd-based sintered magnet has been more widened due to an excellent magnetic characteristic thereof. In recent years, even in a field of a rotating machine such as a motor or a generator, permanent magnetic rotating machines using the Nd-based sintered magnets have been developed for the purpose of lightness and compactness, high-performance, and energy saving of apparatuses. In particular, since an IPM rotating machine having a structure in which the magnets are buried in a rotor can use reluctance torque by magnetization of a rotor yoke in addition to torque by magnetization of the magnet, a research on the IPM rotating machine as a high-performance rotating machine has been in progress. The magnets are buried in the rotor yoke made of silicon steel plate and the like in the IPM rotating machine, such that the magnets do not spring forth by centrifugal force even during rotating. Thus, the IPM rotating machine has high mechanical stability, the IPM rotating machine can be operated with high torque or at a wide range of speed by controlling a current phase, and the IPM rotating machine can be an energy-saving, high-efficiency, and high-torque motor. In recent years, the IPM rotating machine has been rapidly and extensively expanded in use application as motors or generators for electric vehicles, hybrid vehicles, high-performance air-conditioners, industrial purposes, electric trains, and the like.

In general, a permanent magnet in the rotating machine is easily demagnetized by activation of a demagnetization field by winding wires, thus coercive force above a certain level or more is required. Further, since the coercive force decreases with the rise in a temperature, when the rotating machine for the hybrid vehicle and the like is used under a high temperature, a magnet having higher coercive force at room temperature is required. Meanwhile, residual magnetic flux density as an index of the magnitude of magnetic force directly influences an output of the motor, and thus is required to be high as much as possible.

The coercive force and the residual magnetic flux density of the Nd-based sintered magnet are in a trade-off relationship and as the coercive force increases, the residual magnetic flux density decreases. As a result, when a magnet having too strong coercive force is used in the rotating machine, there is a problem in that the output of the motor deteriorates.

In recent years, as seen in WO-2006/043348 A1, there has been reported a method in which Dy (dysprosium) or Tb (terbium) is diffused inward from the surface of the sintered magnet by an application or a sputtering to improve the coercive force without decreasing the residual magnetic flux density. In this method, since Dy or Tb may be efficiently thickened to a grain boundary, the residual magnetic flux density is scarcely decreased and the coercive force can be increased. Further, as the size of the magnet decreases, Dy or Tb which is added is diffused up to the inside of the magnet, and as a result, this method is applied to a small or thin magnet.

Further, in JP-2008-61333 A, there has been reported a so-called surface permanent magnet (SPM) rotating machine in which the magnets having Dy or Tb diffused are placed on the surface of the rotor. In JP-2008-61333 A, there has been reported a fact that it is effective to increase the coercive force of a part having a small thickness in a D-shaped magnet to prevent demagnetization, and that the magnet is acquired by diffusing Dy or Tb.

Further, in JP-2010-135529 A, a manufacturing method of the magnet having Dy or Tb diffused has been reported. In addition, there has been reported a fact that the coercive force is increased up to 6 mm from the surface of the magnet and the coercive force of the surface of the magnet is stronger than the coercive force of the internal center of the magnet by 500 kA/m in the diffusion of Dy and by 800 kA/m in the diffusion of Tb.

### SUMMARY OF THE INVENTION

The present invention is contrived to solve the problem, and an object of the present invention is to provide a rotor adapted for a permanent magnetic rotating machine and the permanent magnetic rotating machine comprising the rotor, having a high output characteristic and high demagnetization resistance.

The present inventors have intensively studied in order to achieve the object and have found that in an IPM rotating machine using two or more rectangular parallelepiped permanent magnets, it is effective to use permanent magnets having strong coercive force in at least one of angular portions at a stator side of each of the permanent magnets. Particularly, the present inventors have found that in a spoke-type IPM rotating machine with a spoke-type rotor, it is effective to use magnets having strong coercive force in at least one of the angular portions at the stator side of the each of the magnets. The spoke-type rotor is a rotor having magnets buried in which each of the magnets has a rectangular shape on a surface vertical to a rotation axis of the rotor, and two opposite sides which are parallel to each other are substantially parallel to a radial direction of the rotor and magnetization directions of the magnets are substantially parallel to a circumferential direction of the rotor, that is, vertical to the radial direction of the rotor. An example of the spoke-type IPM rotating machine is disclosed in JP-2004-173491 A.

The present invention provides a rotor adapted for a permanent magnetic rotating machine, the machine comprising the rotor and a stator comprising a stator core disposed with a clearance from an outer periphery of the rotor and having two or more slots, and winding wires wound through the stator core, the rotor comprising: a rotor core having two or more insertion holes formed in a circumferential direction in the rotor core; and two or more permanent magnets in the two or more insertion holes; wherein each of the permanent magnets is in form of rectangle with two opposite sides substantially parallel to a radial direction and the other two opposite sides substantially parallel to a circumferential direction of the rotor on a surface vertical to a rotation axis of the rotor, and is in form of a rectangular parallelepiped with four longitudinal edges parallel to the rotation axis of the rotor, magnetization directions of the permanent magnets are substantially parallel to the circumferential direction of the rotor, and the magnetization directions of the permanent magnets adjacent to each other in the circumferential direction are reverse to each other, and each of the permanent magnets is an Nd-based rare-earth sintered magnet, has at least one angular portion of four angular portions containing the four longitudinal edges, which has stronger coercive force than a center within the rectangular parallelepiped, and is placed in the insertion hole in such a manner that one of the at least one angular portion having the stronger coercive force is in a stator side and in the rear of a rotating direction of the rotor. The present invention also provides a permanent magnetic rotating machine comprising: the rotor; and the stator comprising a stator core disposed with a clearance from an outer periphery of the rotor and having two or more slots, and a winding wires wound through the stator core.

According to the present invention, the permanent magnets having high residual magnetic flux density and strong coercive force, in particular, strong coercive force in at least one of the angular portions at the stator side of each of the magnets are used in the rotor of the spoke-type IPM rotating machine to provide a spoke-type IPM permanent magnetic rotating machine with a high output characteristic and high demagnetization resistance.

### BRIEF DESCRIPTION OF THE DRAWINGS

FIG. 1 shows an example of a spoke-type IPM rotating machine of the present invention;
FIG. 2 shows the state of magnetic reflux in a permanent magnet in a rotor core;
FIG. 3 shows intensity distribution of a demagnetization field of the permanent magnet in the rotor core; and
FIG. 4 shows a distribution state of the coercive force of a permanent magnet subjected to diffusing.

### DETAILED DESCRIPTION OF THE PREFERRED EMBODIMENT

A rotor adapted for a permanent magnetic rotating machine according to the present invention is a rotor used in an IPM-type permanent magnetic rotating machine in which a rotor comprising a rotor core and two or more permanent magnets in the rotor core, and a stator comprising a stator core having two or more slots and winding wires wound through the stator core are disposed through a clearance. Preferably, the rotor is a rotor used in a spoke-type IPM rotating machine in which each of magnets has a rectangular shape on a surface vertical to a rotation axis of the rotor, two opposite sides of each of the magnets which are parallel to each other are substantially parallel to a radial direction of the rotor, and magnetization directions of the magnets are substantially parallel to a circumferential direction of the rotor. In the present invention, coercive force in at least one of the angular portions of a stator side of each of the permanent magnets is configured to be stronger than the coercive force of the internal center of each of the magnets.

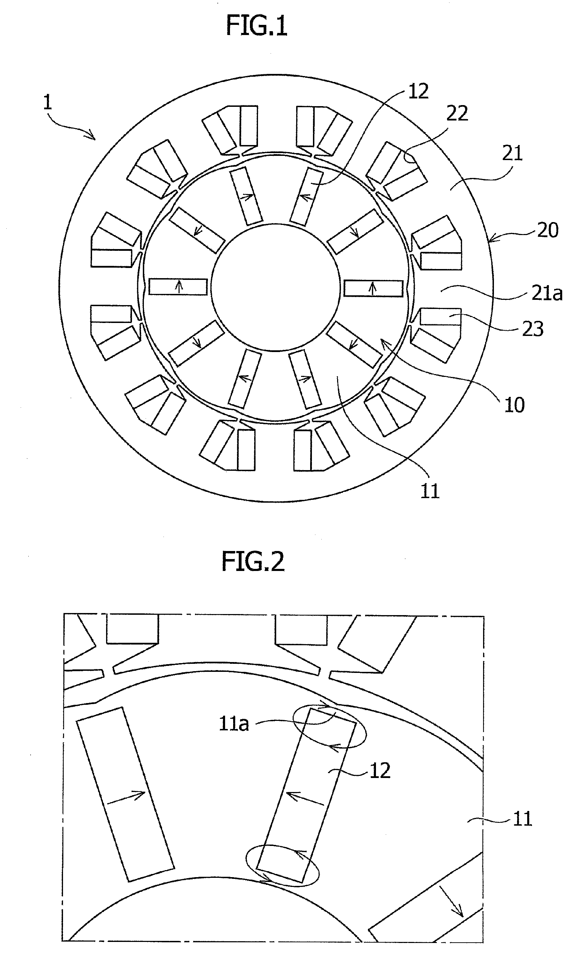

An example of the spoke-type IPM rotating machine is illustrated in FIG. 1. The spoke-type IPM rotating machine 1 of FIG. 1 comprises a rotor 10 and a stator 20 disposed with a clearance from outer periphery of the rotor 10. The rotor 10 comprises a rotor core 11 in which electric steel plates are stacked, for example. The rotor core 11 functions even as a yoke. Two or more insertion holes are provided in the rotor core 11 in a circumferential direction of the rotor core 11. Each of permanent magnets 12 is placed in each insertion hole. Preferably, each insertion hole has substantially the same shape as each of the permanent magnets 12 placed in each insertion hole. Each insertion hole has the rectangular shape on the surface vertical to the rotation axis of the rotor 10, and a pair of two opposite sides which are parallel to each other are provided to be substantially parallel to the radial direction of the rotor 10 and the other pair of two opposite sides which are parallel to each other are provided to be substantially parallel to the circumferential direction of the rotor 10. The insertion hole has an axis -direction depth of the rotor 10. The insertion hole may be a through-hole. In FIG. 1, arrows in the permanent magnets 12 indicate the magnetization directions of permanent magnets 12. The magnetization directions of the permanent magnets 12 are substantially parallel to the circumferential direction of the rotor 10 and the magnetization directions of the magnets 12 adjacent to each other in the circumferential direction are reverse to each other.

The stator 20 comprises a stator core 21 having slots 22, for example, in which the electric steel plates are stacked. Wires (coils) 23 are wound on each teeth 21a of the stator core 21. The coils 23 form, for example, 3 phases and Y connection. In FIG. 1, the stator 20 having twelve slots is illustrated, and the number of slots is not limited thereto and may be selected according to the purpose of the rotating machine.

In FIG. 1, the rotor 10 having ten poles is illustrated, and the number of poles is not limited thereto and may be selected according to the purpose of the rotating machine. The number of poles, that is, the number of the insertion holes having the magnets inserted is preferably even numbered and the insertion holes are preferably disposed evenly in the circumferential direction of the rotor 10.

An outer peripheral shape of the rotor core 11 is preferably formed in a shape which is not a complete circle on the surface vertical to the rotation axis. Preferably, the outer peripheral shape of the rotor core 11 on the surface vertical to the rotation axis is a shape having arches (including an arc) which are convex outward, the number of the arches is as many as the number of the permanent magnets 12 and a straight line connecting a start point of each of the arches and a center of the rotor core 11 passes through each of the permanent magnets 12. The outer peripheral shape of the rotor core 11 is effective when a torque ripple or cogging torque intends to be reduced.

The permanent magnet 12 is preferably an Nd-based rare-earth sintered magnet. The rare-earth sintered magnet is more excellent than the other magnets in both residual magnetic flux density and coercive force. The Nd-based rare-earth sintered magnet is lower in cost and more excellent in residual magnetic flux density than an Sm-based rare-earth sintered magnet. As a result, the Nd-based rare-earth sintered magnet is a magnetic material which is optimal to the high-performance rotating machine. As the Nd-based rare-earth sintered magnet, a sintered magnet having an Nd-Fe-B based composition such as Nd₂Fe₁₄B may be used.

The permanent magnet 12 is preferably a rectangular parallelepiped (including a cube). In the permanent magnet 12, four longitudinal edges are placed in the insertion holes in an axis direction of the rotor 10 as a rectangle having two opposite sides which are substantially parallel to the radial direction of the rotor 10 and the other two opposite sides which are substantially parallel to the circumferential direction of the rotor 10 on the surface vertical to the rotation axis of the rotor 10. Preferably, the length of two opposite sides of the rectangle substantially parallel to the radial direction is 2 to 20 times longer than the length of the other two opposite sides of the rectangle substantially parallel to the circumferential direction. As a result, a region of the rotor may be effectively used. The height of the permanent magnet 12 may be substantially the same as the height of the rotor 10 (the length of the rotor 10 in the axial direction).

As the permanent magnet 12, one permanent magnet piece may be placed in each insertion hole of the rotor core 11. Alternatively, two or more divided permanent magnet pieces may be placed in the respective insertion holes of the rotor core 11 through stacking and bonding by using a bonding agent or the two or more divided permanent magnet pieces may be stacked and placed in the respective insertion holes without using the bonding agent.

In the permanent magnetic rotating machine, coil current becomes maximum and a magnetic field generated from the coil also becomes maximum when maximum torque is generated. In the IPM rotating machine, magnetic flux generated from the coil of the stator enters the rotor yoke from the teeth wound with the coil through a clearance between the stator and the rotor and thereafter, the direction of the magnetic flux is changed in the circumferential direction in the rotor yoke and the magnetic flux passes through the clearance again and returns to another teeth adjacent to the above teeth wound with the coil on which current flows in an reverse direction. In this case, since the magnetic flux generated from the coil intends to passes through the yoke which is higher than the magnet in permeability, the magnetic flux flows in the yoke part inside the rotor by avoiding the insertion hole, in which the magnet is placed, provided in the rotor. However, a part where a magnetic flux path is narrow as the periphery of the insertion hole is in a magnetic saturation state and the magnetic flux leaks to the insertion hole. In particular, since a region of the magnet at the stator side is close to the coil, the magnetic flux from the coil easily leaks to a magnetic region. The magnetic flux becomes the demagnetization field to the magnet placed in the insertion hole, making the magnet susceptible to demagnetization.

In the spoke-type IPM rotating machine, since the magnetization direction of the magnet faces the circumferential direction, the magnetic flux generated from the magnet primarily flows into the stator through the clearance between the stator and the rotor. However, as indicated by a circular arrow in FIG. 2, the magnetic flux generated from the magnet returns in the vicinity of the surface parallel to the magnetization direction. When the magnetic flux which returns is in a large amount, the magnetic flux that flows into the stator decreases, and as a result, the torque is reduced. Thus, it is preferable that a yoke 11a of a magnetic flux return portion is as narrow as possible to reduce the amount of the magnetic flux that returns. However, the yoke 11a which is narrow is in the magnetic saturation state, and as a result, the magnetic flux easily leaks. As described above, the magnetic flux generated from the coil also passes through the yoke 11a, and thus flows in the corresponding magnetic flux return portion, but the magnetic flux leaks to the magnet part due to the magnetic saturation state. The magnetic flux which leaks serves as the demagnetization field to the magnet, making the magnet susceptible to demagnetization. Therefore, in particular, magnetic saturation becomes remarkable in the magnetic flux return portion close to the clearance, and as a result, the leak of the magnetic flux increases and the demagnetization field increases at the angular portions of the magnet at the stator side.

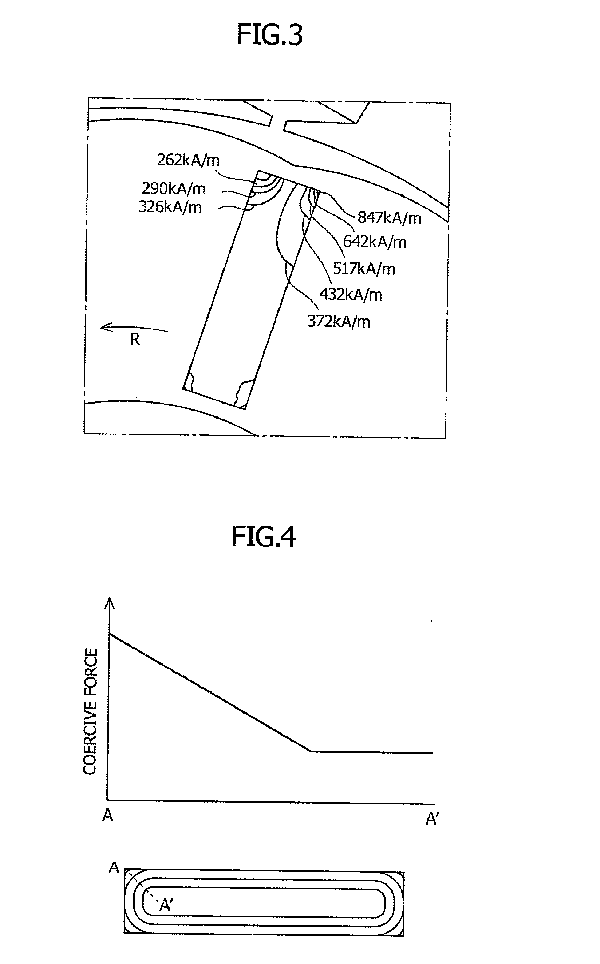

The state of the intensity distribution of the demagnetization field in the permanent magnet is illustrated in FIG. 3 at the maximum torque in the IPM rotating machine illustrated in FIG. 1. In FIG. 3, as indicated by an arrow R, the rotor rotates in a counterclockwise direction. In this case, the demagnetization field that works on the magnet is the largest at the angular portion at the stator side in the rear of a rotating direction (the angular portion of the stator side at the right side in the magnet of FIG. 3). Since the demagnetization field becomes large at the angular portion at the stator side in the rear of the rotating direction, when the rotating direction of the rotor is reverse, a site where the demagnetization field is large is also reverse (the angular portion at the stator side at the left side in the magnet of FIG. 3). Therefore, each of the permanent magnets has strong coercive force in at least one angular portion among four angular portions containing the four longitudinal edges and is placed into the insertion hole in such a manner that one of the at least one angular portion having strong coercive force is in a stator side and in the rear of the rotating direction of the rotor. The magnet is preferably has strong coercive force also in another (the front of the rotating-direction) angular portion positioned at the stator side. That is, preferably, a magnet having strong coercive force in at least two angular portions of the stator side among four angular portions is used.

Diffusing Dy or Tb by application or sputtering is preferable as a method of acquiring the magnet having strong coercive force. Besides, as a general method of acquiring the magnet having the strong coercive force, there is a method using a magnet having the strong coercive force in whole of the magnet, but in this method, when the coercive force increases, the residual magnetic flux density decreases, and thus the output of the motor deteriorates. In this regard, in a diffusing method of Dy or Tb, the coercive force can be increased from the surface up to a depth of approximately 6 mm of the magnet, while the residual magnetic flux density scarcely decreases. Furthermore, an effect of increasing the coercive force by diffusion is the largest in the angular portions of the magnet as described below. Therefore, a method of increasing the coercive force by performing the diffusion of Dy or Tb is very effective in a countermeasure against demagnetization of the magnet in the spoke-type IPM rotating machine. By increasing the coercive force of at least one of the angular portions at the stator side of the magnet with the above method and using the obtained magnet, demagnetization can be prevented even when the rotating machine is operated at a rated output and the large demagnetization field is generated in the angular portions at the stator side of the magnet. Since the magnet obtained by the above diffusing method has higher residual magnetic flux density than a magnet having the coercive force is increased by another method, the output of the rotating machine can be increased.

A method of diffusing Dy or Tb inward from the surface of the magnet by application or sputtering is disclosed in WO-2006/043348 A1 and JP-2008-61333 A, and is also called surface treatment by a grain boundary diffusion alloy method. In this method, while powder containing preferably one or more elements selected from the rare-earth elements including Y and Sc, more preferably one or more selected from oxide, fluoride and acid fluoride of Dy or Tb, is present on the surface of a sintered magnetic body, the sintered magnetic body and the powder are subjected to heat treatment under vacuum or inert gas at a temperature which is equal to or less than a sintering temperature of the sintered magnetic body. The sintered magnetic body is preferably a sintered magnetic body of an R¹-Fe-B-based composition (R¹ represents one or more types selected from the rare-earth elements including Y and Sc).

A grain diameter of the powder influences reactivity when the Dy or Tb component of the powder is absorbed in the magnet. As a grain is smaller, a contact area associated with the reaction increases. In order to obtain the advantage in the present invention, an average grain diameter of the power present on the surface of the magnet is preferably 100 µm or less, more preferably 10 µm or less. A lower limit of the average grain diameter of the powder is not particularly limited, but is preferably 1 nm or more. The average grain diameter is preferably measured by a laser diffraction method.

Diffusion of Dy or Tb allows Dy or Tb contained in the powder that is present on the surface of the magnet to be absorbed in the magnet and thickened in the vicinity of an interface of a crystalline grain of the magnetic body. As a result, the coercive force of the magnet can be increased while suppressing the decrease in the residual magnetic flux density of the magnet.

By diffusing Dy or Tb, the concentration of Dy or Tb in the vicinity of the interface decreases inward from the surface of the magnet. Therefore, the increase effect of the coercive force by the diffusion is higher toward the surface of the magnet and the increase effect of the coercive force gradually decreases inward from the surface of the magnet.

In the angular portion of the magnet, containing a portion where at least two surfaces of the magnet which are perpendicular to each other are crossed and a portion in the vicinity thereof, Dy or Db is diffused from each surface and thus thicker than the center of the surface of the magnet which has been subjected to the diffusion, thereby increasing the increase effect of the coercive force. As a result, as illustrated in FIG. 4, when a distance from the angular portion A of the magnet toward the internal center A' of the magnet not influenced by the diffusion is set as an X axis and the coercive force is set as a Y axis, the coercive force increases as it becomes closer to the angular portion of the magnet.

Accordingly, with respect to a magnetic environment having the intensity distribution of the demagnetization field illustrated in FIG. 3, the increase in the coercive force by the diffusion is particularly effective. Since the coercive force by the diffusion is approximately 500 to 800 kA/m higher around the center of the surface of the magnet and even higher in the angular portions of the magnet, the coercive force can be sufficiently increased with respect to the magnet having the intensity distribution of the demagnetization field illustrated in FIG. 3.

In the example illustrated in FIG. 3, one of the angular portions at the stator side has a higher demagnetization field (847 kA/m) than the internal center of the magnet (372 kA/m) by 475 kA/m. When the thickness of the magnet is approximately 10 mm or more, the diffusing effect does not sufficiently reach the internal center of the magnet and it is difficult to expect the increase in the coercive force at the internal center of the magnet. As a result, in order to prevent demagnetization, the magnet before the diffusion needs to have coercive force enough to endure the demagnetization field at the internal center of the magnet, and the coercive force is increased by 475 kA/m or more, preferably 500 kA/m or more, more preferably 600 kA/m or more by the diffusion in the angular portions of the magnet. Meanwhile, when the thickness of the magnet is less than approximately 10 mm, as the thickness decreases, the coercive force at the internal center of the magnet is increased by the diffusion. As a result, a difference in coercive force between the internal center and the angular portions decreases. In this case, when the coercive force at the internal center of the magnet, which is increased after the diffusion, is designed to be just as much as for enduring the demagnetization field at the internal center of the magnet, the angular portions of the magnet may not endure the large demagnetization field. Accordingly, the coercive force of the angular portions of the magnet is preferably increased by 600 kA/m or more by the diffusion regardless of the thickness of the magnet. As a result, even when the large demagnetization field is generated in the angular portions at the stator side of the magnet, demagnetization can be prevented. In addition, since the residual magnetic flux density is high, the output of the rotating machine can be increased. The coercive force of the magnet before the diffusion may be set to preferably 800 to 2800 kA/m, more preferably 800 to 2000 kA/m, and even more preferably 800 to 1600 kA/m.

Therefore, the magnet used in the spoke-type IPM rotating machine includes a magnet of which the coercive force in at least one of the angular portions at the stator side is increased by preferably 475 kA/m and more, more preferably 600 kA/m or more by the diffusion.

Diffusing Dy or Tb may be performed on an entire surface or a partial surface of the permanent magnet. When the diffusion on the partial surface is performed, the coercive force may increase in at least one of the angular portions at the stator side containing the longitudinal edges of the permanent magnet. In other words, the diffusion may be performed in at least one of the angular portions at the stator side containing the longitudinal edges of the rectangular parallelepiped permanent magnet.

The area of the angular portion subjected to the diffusion depends on the size of a rectangular cross section which is vertical to the rotation axis, or the position of installation such as the rear or front of the rotating direction. It is preferably 10 to 100% of each length of the two sides of the rectangular cross section of the magnet, from the longitudinal edges toward right and left (toward the circumferential direction and the radial direction).

When the entire surface of the rectangular parallelepiped magnet is subjected to the diffusion, the coercive force is increased in all of the angular portions, but the increased coercive force does not exert an adverse influence on the magnet or the rotating machine. It is satisfactory as long as the coercive force in at least one of the angular portions at the stator side is increased. A magnet of twice longer in the radial-direction size and the same in the circumferential size in comparison with the respective sizes of the magnet placed in the rotor is subjected to the diffusion on the entire surfaces thereof. Then, the magnet is divided into two pieces in the radial direction and the angular portions of the magnet piece where the coercive force has increased may be arranged in the stator side of the rotor.

When two or more permanent magnet pieces are placed in each insertion hole, all of the permanent magnet pieces may be subjected to the diffusion, or one or more permanent magnet pieces containing at least one of two angular portions containing the longitudinal edges which will be arranged at the stator side of the permanent magnet may be subjected to the diffusion. The diffusion may be performed before or after stacking the permanent magnet pieces.

When a circumferential side of the magnet is as thin as 2 mm or less, the diffusing effect reaches the inside of the magnet to some extent and internal coercive force also increases to some extent. As a result, a difference in coercive force between the inside and the angular portion decreases, but an adverse influence thereby does not occur.

It is reported in JP-2008-61333 A that in the SPM rotating machine, when a thin portion of a D-shaped magnet in which a magnetic demagnetization field is strong and demagnetization easily occur, is subjected to the diffusion of Dy or Tb, the coercive force is sufficiently increased up to the inside due to its thinness and thus, diffusing Dy or Tb is an effective method to prevent demagnetization. Meanwhile, in the rectangular magnet used in the IPM rotating machine, the thickness of the magnet is constant and there is no large difference in magnitude of the magnetic demagnetization field, and as a result, it has not been considered that the diffusing method is effective to prevent demagnetization. However, according to the present invention, the demagnetization field by a stator coil also needs to be considered in regard to demagnetization. It is discovered that the increase in the coercive force by the diffusion is useful to prevent demagnetization of the magnet even in the IPM rotating machine having the spoke-type rotor.

### EXAMPLES

Hereinafter, a detailed aspect of the present invention will be described with reference to examples, but a content of the present invention is not limited thereto.

### Example 1

As a magnet, Nd₂Fe₁₄B of a rectangular parallelepiped Nd-based rare-earth sintered magnet was used, in which residual magnetic flux density was 1.32 T, coercive force is 1000 kA/m, the size was 12 mm length x 3 mm width x 50 mm height, and the width direction (3 mm) was a magnetization direction. The two or more magnets were provided and subjected to the diffusion. As the diffusion, granular dysprosium fluoride having an average grain diameter of 5 µm was mixed with ethanol at a weight ratio of 1:1 and the magnets were immersed in the mixture and thereafter, subjected to heat treatment at 900°C under an Ar atmosphere for one hour. With respect to one of the diffused magnets, a cube of which was 1 mm on each side was cut from an angular portion of the magnet containing apexes of the magnet and coercive force was measured by using a BH tracer. As a result, the coercive force of the magnet at the angular portion was 1600 kA/m. Therefore, the coercive force was increased by 600 kA/m.

The magnets illustrated in FIG. 1 were installed in a rotating machine having 10 poles and 12 coils, a rotor diameter of 50 mm and an axis length of 50 mm, and an output test of the motor was performed. The magnets were placed in such a manner that the magnetization directions were in a circumferential direction, the magnetization directions of the magnets adjacent to each other in the circumferential direction were reversed to each other, and the height of the magnet became an axis direction of the rotor. Each of a rotor and a stator had a structure in which electric steel plates having a thickness of 0.35 mm were stacked and coils were wired in 3 phases and Y connection by concentrated winding.

First, as a result of measuring no-load electromotive force at a rotational speed of 1000 rpm with a voltmeter, line voltage was 114 V at a magnet temperature of 20°C. Subsequently, as a result of performing an operation at rated output of 800 W at a rotational speed of 1000 rpm, coil current was 4.5 A. In this case, the magnetic temperature was 90°C. Thereafter, as a result of remeasuring the no-load electromotive force at the rotational speed of 1000 rpm in order to examine a demagnetization level of the magnets, the line voltage was 114 V at the magnet temperature of 20°C. Therefore, the line voltage was the same value before and after a rated operation. Accordingly, it could be seen that the magnets were not demagnetized. As described above, by increasing the coercive force at the angular portions at the stator side of the magnet by 600 kA/m by the diffusion, it was possible to acquire a rotating machine in which demagnetization does not occur.

### Comparative Example 1

Two or more magnets, each having the same magnetic characteristic, the same size and shape, and the same magnetization direction as those of the magnets in Example 1, were subjected to the same tests as in Example 1 without the diffusion treatment. First, as a result of measuring the no-load electromotive force at the rotational speed of 1000 rpm, the line voltage was 114 V, which was the same as in Example 1. Subsequently, as a result of performing an operation at the rotational speed of 1000 rpm and coil current of 4.5 A, the magnetic temperature was 90°C and the output was 760 W. Since the magnet was demagnetized, it is supposed that the output became lower than Example 1. Thereafter, as a result of remeasuring the no-load electromotive force at the rotational speed of 1000 rpm in order to examine the demagnetization level of the magnets, the line voltage was 108 V at the magnet temperature of 20°C. Therefore, the line voltage after the rated operation was lower than that before the rated operation by approximately 5 %. As a result, it could be seen that the magnets were demagnetized.

As set forth above, it is evident that the magnet in which the coercive force in the angular portions at the stator side had not been increased resulted in demagnetization and deterioration of the motor output.

## Claims

1. A rotor (10) adapted for a permanent magnetic rotating machine, the machine comprising the rotor and a stator (20) comprising a stator core (21) disposed with a clearance from an outer periphery of the rotor (10) and having two or more slots (22), and winding wires (23) wound through the stator core (21),
the rotor (10) comprising:
a rotor core (11) having two or more insertion holes formed in a circumferential direction in the rotor core (11); and
two or more permanent magnets (12) in the two or more insertion holes;
wherein each of the permanent magnets (12) is in form of rectangle with two opposite sides substantially parallel to a radial direction and the other two opposite sides substantially parallel to a circumferential direction of the rotor (10) on a surface vertical to a rotation axis of the rotor (10), and is in form of a rectangular parallelepiped with four longitudinal edges parallel to the rotation axis of the rotor (10),
magnetization directions of the permanent magnets (12) are substantially parallel to the circumferential direction of the rotor (10), and the magnetization directions of the permanent magnets (12) adjacent to each other in the circumferential direction are reverse to each other, and
each of the permanent magnets (12) is an Nd-based rare-earth sintered magnet, has at least one angular portion of four angular portions containing the four longitudinal edges, which has stronger coercive force than a center within the rectangular parallelepiped, and is placed in the insertion hole in such a manner that one of the at least one angular portion having the stronger coercive force is in a stator side and in the rear of a rotating direction of the rotor (10).

2. The rotor adapted for a permanent magnetic rotating machine according to claim 1, wherein both angular portions in the stator side have the stronger coercive force.

3. The rotor adapted for a permanent magnetic rotating machine according to claim 1 or 2, wherein the stronger coercive force is acquired by increasing coercive force from the surface up to 6 mm depth of the permanent magnet (12) by diffusion of Dy or Tb.

4. The rotor adapted for a permanent magnetic rotating machine according to claim 3, wherein the stronger coercive force is 475 kA/m or more stronger than coercive force of the permanent magnet (12) which has not been subjected to the diffusion.

5. The rotor adapted for a permanent magnetic rotating machine according to claim 4, wherein the stronger coercive force is 600 kA/m or more stronger than coercive force of the permanent magnet (12) which has not been subjected to the diffusion.

6. The rotor adapted for a permanent magnetic rotating machine according to any one of claims 1 to 5, wherein the length of the opposite two sides of the rectangle substantially parallel to the radial direction is 2 to 20 times longer than the length of the other opposite two sides of the rectangle substantially parallel to the circumferential direction.

7. The rotor adapted for a permanent magnetic rotating machine according to any one of claims 1 to 6, wherein the shape of the outer periphery of the rotor core (11) is a shape having as many arches as the permanent magnets (12), and the arches are convex outward in such a manner that a straight line connecting a start point of each of the arches and a center of the rotor core (11) passes through the permanent magnet (12).

8. A permanent magnetic rotating machine, comprising:
the rotor (10) according to any one of claims 1 to 7; and
the stator (20) comprising a stator core (21) disposed with a clearance from an outer periphery of the rotor (10) and having two or more slots (22), and winding wires (23) wound through the stator core (21).
